Europäisches Patentamt

European Patent Office

Office européen des brevets

(19)

(11) Veröffentlichungsnummer : **0 313 995 B1**

# (12) EUROPÄISCHE PATENTSCHRIFT

(45) Veröffentlichungstag der Patentschrift :
18.09.91 Patentblatt 91/38

(51) Int. Cl.⁵ : **A01C 15/00**

(21) Anmeldenummer : **88117512.9**

(22) Anmeldetag : **21.10.88**

(54) Streugerät, insbesondere Schleuderdüngerstreuer.

(30) Priorität : 30.10.87 DE 3736865
09.04.88 DE 3811931

(43) Veröffentlichungstag der Anmeldung :
03.05.89 Patentblatt 89/18

(45) Bekanntmachung des Hinweises auf die
Patenterteilung :
18.09.91 Patentblatt 91/38

(84) Benannte Vertragsstaaten :
DE FR GB

(56) Entgegenhaltungen :
AU-B- 1 914 167
DE-A- 1 784 362
DE-B- 1 245 407
GB-A- 646 305
US-A- 2 798 726

(73) Patentinhaber : Amazonen-Werke H. Dreyer
GmbH & Co. KG
Am Amazonenwerk 9-13
W-4507 Hasbergen-Gaste (DE)

(72) Erfinder : Wiese, Walter
Roter Berg 18
W-4507 Hasbergen (DE)

(74) Vertreter : Patentanwälte Grünecker,
Kinkeldey, Stockmair & Partner
Maximilianstrasse 58
W-8000 München 22 (DE)

## Beschreibung

Die Erfindung betrifft einen Schleuderdüngerstreuergemäß des Oberbegriffes des Anspruches 1.

Ein derartiger Schleuderdüngerstreuer ist bereits durch die GB-PS646305 bekannt. Diese Rührwelle ist quer zur Fahrtrichtung angeordnet, wobei die Antriebswelle durch die Seitenwände im unteren Bereich des Vorratsbehälters hineingeführt und oberhalb der Auslauföffnungen mit Rührelementen in Form von schraubenlinienförmigen Rührstäben ausgestattet ist. Die schraubenlinienförmigen Rührstäbe weisen jeweils mehrere schraubenlinienförmige Gänge auf. Die Rührstäbe sind als Rührschnecken ausgebildet. Der eine Rührstab mit mehreren Schneckengängen weist eine linksgängige Steigung und der andere Rührstab eine rechtsgängige Steigung auf, wobei bezogen auf die Drehrichtung der Rührwelle die beiden eine entgegengesetzte Steigung aufweisenden Rührstäbe derart auf der Rührwelle angeordnet sind, daß ihre Förderwirkung aufeinander zu gerichtet ist.

Die Ausbildung der Rührstäbe als Schnecke mit mehreren Schneckenwindungen hat sich jedoch als äußerst nachteilig erwiesen, da hierdurch eine zu große Rührwirkung erreicht wird. Die Rührwirkung dieser Rührelemente ist zu stark, so daß der Dünger zerdrückt und zermahlen wird. Daüberhinaus ist von erheblichem Nachteil, daß sich oberhalb der Auslauföffnungen nur ein Teil des einen Rührstabes befindet. Der andere Rührstab befindet sich über seine ganze Längserstreckung außerhalb der Auslauföffnungen, d.h., daß das Ende im mittleren Bereich dieses Rührstabes sich außerhalb der Auslauföffnungen befindet. Hierdurch ergibt sich eine ungleichmäßige Düngerzuführung zu der Auslauföffnung. Dieses wird noch dadurch verstärkt, daß die beiden mittleren Enden der Rührelemente unmittelbar aneinander anstoßen. Außerdem ist nachteilig, daß die Stabanfänge, wie bereits vor gesagt, direkt miteinander verbunden sind.

Der Erfindung liegt daher die Aufgabe zugrunde, den Dünger, in schonender und gleichmäßiger Weise den Schleuderscheiben durch die einstellbaren Auslauföffnungen zu zudosieren.

Diese Aufgabe wird erfindungsgemäß durch die Maßnahmen des kennzeichnenden Teils des Anspruches 1 gelöst.

Infolge dieser Maßnahmen wird eine schonend arbeitende Rühreinrichtung geschaffen, die das sich im Vorratsbehälter befindliche Material auflockert und gleichzeitig schonend in Richtung auf den mittleren Teil der Auslauföffnungen fördert. Durch den freien in axialer Richtung gesehen über den Haltestab überstehenden Rührnocken des Rührstabes werden zu Klumpen zusammengeballte Düngemittelpartikel von dem schraubenlinienförmig verdrehten Rührstab erfaßt und zerkleinert und in Richtung der Auslauföffnung gefördert, auch aus den Ecken des Vorratsbehälters im unteren Bereich heraus. Somit wird in einfachster Weise eine gleichmäßige Ausbringung des Düngers auf dem Feld, selbst bei klumpigem Dünger gewährleistet. Düngerklumpen können somit die Ausbringmenge und die Gleichmäßigkeit der Düngerausbringung nicht mehr negativ beeinflussen. Eine besonders gleichmäßige Zuführung des Düngers über die Auslauföffnungen zu der Streueinrichtung wird dadurch erreicht, daß zwei schraubenlinienförmig verdrehte Rührstäbe für jedes Rührelement vorgesehen sind, wobei der eine Rührstab linksgängig und der andere Rührstab rechtsgängig ausgebildet ist. Dadurch, daß der eine Rührstab eine linksgängige Steigung und der andere Rührstab eine rechtsgängige Steigung aufweist, wobei bezogen auf die Drehrichtung der Rührwelle die beiden eine entgegengesetzte Steigung aufweisende Rührstäbe derart auf der Rührwelle angeordnet sind, daß ihre Förderwirkung aufeinander zugerichtet ist, wird in äußerst einfacher und überraschender Weise der Dünger aus den Eckbereichen der trichterförmigen Spitzen immer der Mitte der in der Bodenplatte angeordneten Auslauföffnungen zugeführt, so daß bei jeder Einstellung des Öffungsquerschnittes der Auflauföffnungen eine gleichmäßige und kontinuierliche Zuführung des auszubringenden Gutes, vor allem Dünger, zu der Streueinrichtung gewährleistet ist.

In einer bevorzugten Ausführung ist vorgesehen, daß für jedes Rührelement zwei schraubenlinienförmig verdrehte Rührstäbe vorgesehen sind und daß die Rührstäbe in einem Abstand zueinander angeordnet sind. Durch diese Anordnung der Rührstäbe des Rührelementes wird eine schonende und gleichmäßige Durchrührung des Düngers im unteren Bereich des Vorratsbehälters oberhalb der Auslauföffnung erreicht, so daß immer der Dünger in gleichmäßiger Weise der Streueinrichtung zugeführt wird. Als besonders vorteilhaft hat sich herausgestellt, daß zwischen den Rührstäben ein axialer Abstand vorgesehen ist, so daß die Rührbereiche der Rührstäbe sich nicht überlappen. Hierdurch wird bei allen Ausbringmengen und bei jeder Größe der Auslauföffnung, die über einen Schieber unterhalb der Auslauföffnung einstellbar ist, eine gleichmäßige Düngerzuführung erreicht.

Weiterhin ist erfindungsgemäß vorgesehen, daß die Rührelemente auf einer Hülse angeordnet sind, welche auf der Rührwelle aufgesteckt und mittels eines Sicherungsstiftes gesichert ist, und daß der Sicherungsstift sich zwischen den beiden Rührstäben befindet. Infolge dieser Maßnahmen ergibt sich eine äußerst einfache Ausbildung des Rührelementes sowie eine vorteilhafte Anordnung des Sicherungsstiftes der sich durch die entsprechende Anordnung nicht negativ, sondern positiv auf das Ausbringen des Düngers auswirkt. Durch den Sicherungsstift wird gleichzeitig, wenn man ihn entsprechend lang ausbildet, noch eine zusätzliche Rührwir-

2

EP 0 313 995 B1

kung zwischen den Rührstäben erreicht.

Weitere Einzelheiten sind den übrigen Unteransprüche, der Beispielsbeschreibung und den Zeichnungen zu entnehmen.

Hierbei zeigt

Fig. 1    einen erfindungsgemäß ausgebildeten Schleuderdüngerstreuer in Prinzipdarstellung und in der Ansicht von hinten,

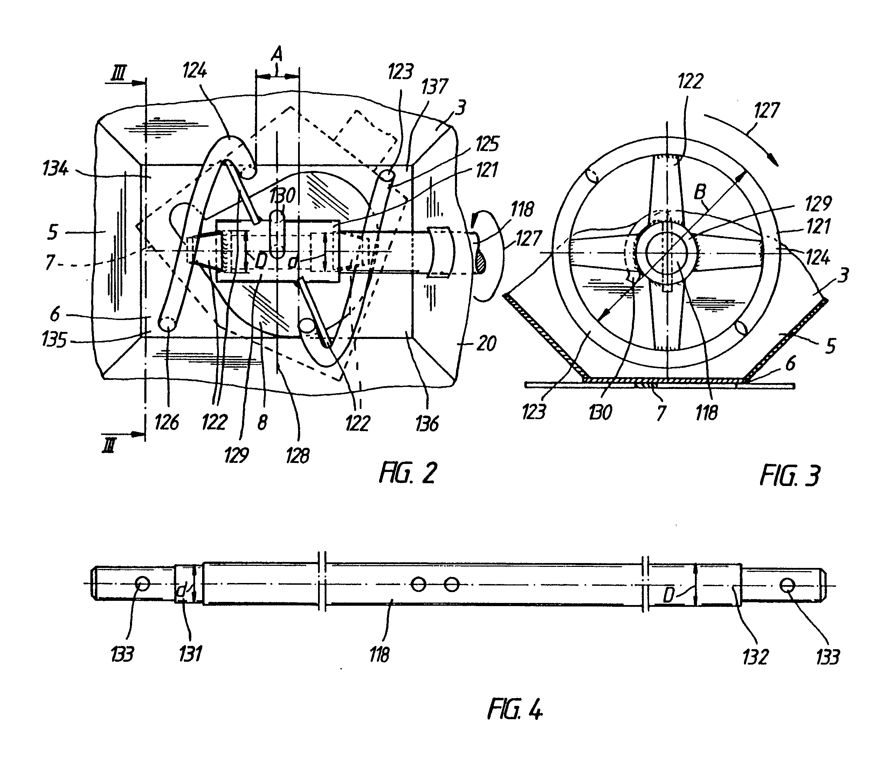

Fig. 2    ein erfindungsgemäß ausgebildetes Rührelement in der Draufsicht,

Fig. 3    das erfindungsgemäße Rührelement in der Seitenansicht gemäß Schnitt XVI-XVI und

Fig. 4    die Rührwelle, auf welcher die erfindungsgemäßen Rührelemente angeordnet werden.

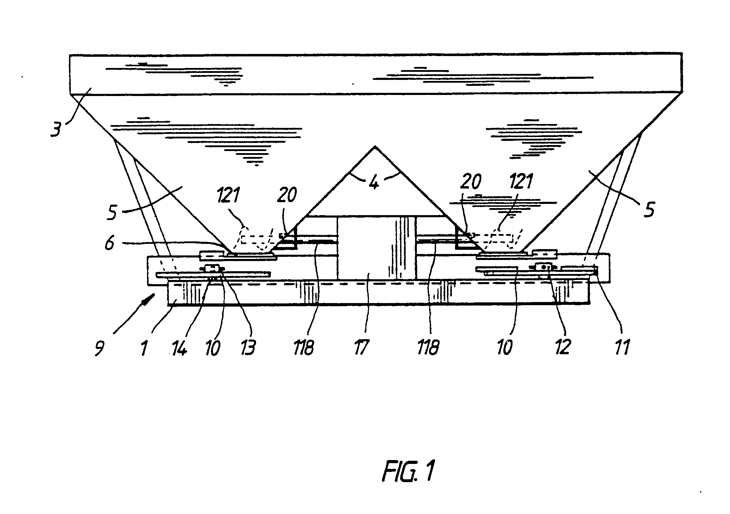

Der Schleuderdüngerstreuer gemäß Fig. 1 weist den Rahmen 1 auf, der auf in seiner in Fahrtrichtung gesehen vorderen Seite mit den nicht näher dargestellten Kupplungselementen zum Anbau an den Dreipunktkraftheber eines Schleppers ausgestattet ist. An dem Rahmen 1 ist der trichterförmig ausgebildete Vorratsbehälter 3 befestigt, der das dachförmige Mittelteil 4 aufweist, wodurch der Vorratsbehälter 3 in die beiden trichterförmigen Behälterteile 5 unterteilt ist. Diese trichterförmigen Behälterteile weisen jeweils die Bodenplatte 6 auf, in der sich die mit Hilfe des Schiebers 7 verschließ- und in verschiedenen Öffnungsweiten einstellbare Auslauföffnung 8 befindet. Unterhalb dieser Auslauföffnungen 8 ist die Streueinrichtung 9 vorgesehen, die im wesentlichen aus den beiden Schleuderscheiben 10 und den auf diesen beiden Schleuderscheiben 10 angeordneten Wurfschaufeln 11 besteht. Die Schleuderscheiben 10 sind mit Hilfe des buchsenartigen Befestigungselementes 12 und des Federsplintes 13 jeweils auf der Antriebswelle 14 leicht lösbar angebracht. Angetrieben werden die Schleuderscheiben 10 in der Streueinrichtung 9 über Winkelgetriebe, die jeweils über die Antriebswellen mit dem Hauptgetriebe verbunden sind. Dieses Hauptgetriebe wird in bekannter Weise von der an die Zapfwelle des den Schleuderstreuer tragenden Schlepper angeschlossenen Gelenkwelle angetrieben.

Über eine nicht näher dargestellte Antriebseinrichtung, die sich im Hauptgetriebe 17 befindet und ein Untersetzungsgetriebe aufweist, wird die horizontale und quer zur Fahrtrichtung angeordnete Rührwelle 118 angetrieben. Diese Rührwelle 118 ist jeweils im unteren Bereich der trichterförmigen Behälterteile 5 angeordnet, wobei die Antriebswelle durch die Trichterwände 20 in die unteren trichterförmigen Behälterteile 5 des Vorratsbehälters 3 hineingeführt ist. Die Rührwelle 118 weist in jeder Behälterspitze 5 das Rührelement 121 auf.

In jeder Trichterspitze 5 ist auf der Rührwelle 118 ein Rührelement 121 angeordnet. Die Rührelemente 121 in jeder Trichterspitze sind gleich ausgebildet. Das Rührelement 121 weist je zwei in einem Abstand über die Halteelemente 122 angeordnete Rührstäbe 123 und 124 auf. Die Rührstäbe 123 und 124 sind gegenüber der Rührwellenachse schraubenlinienförmig verdreht ausgebildet. Der Rührstab 123 weist den freien und in axialer Richtung gesehen über den Haltestab 122 überstehenden Rührnocken 125 auf, während der Rührstab 124 den freien und in axialer Richtung gesehen über den Haltestab 122 überstehenden Rührnocken 126 aufweist. Die Rührstäbe 123 und 124 sind in einem Abstand zueinander angeordnet. Hierbei ist zwischen den Rührstäben 123 und 124 ein axialer Abstand A vorgesehen, so daß die von den Rührstäben überstichenen Rührbereiche der Rührstäbe 123 und 124 sich nicht überlappen. Der Rührstab 123 weist bezogen auf die Drehrichtung 127 der Rührwelle 118 eine rechtsgängige Steigung auf, während der Rührstab 124 bezogen auf die Drehrichtung 118 eine linksgängige Steigung aufweist. Hierbei sind die Rührstäbe 123 und 124 bezogen auf die Drehrichtung 127 — die beiden Rührstäbe 123 und 124 weisen eine entgegengesetzte Steigung auf — derart auf der Rührwelle 118 angeordnet, daß ihre Förderwirkung aufeinander zu ; d.h. in Richtung auf die durch die strichpunktierte Linie angedeutete Mitte 128 der Auslauföffnung A gerichtet ist. Jeder Rührstab 123 und 124 weist etwa eine halbe Schraubenwindung, als einen über 180° verlaufenden Schraubengang auf. Die Stabanfänge eines jeden Rührelementes 123 und 124 sind um etwa 180° versetzt zueinander angeordnet.

Die Rührstäbe 123 und 124 des Rührelementes 121 sind auf der Hülse 129 mittels der Halteelemente 122 befestigt. Die Hülse 129 ist auf die Rührwelle 118 aufgesteckt und mittels des Sicherungsstiftes 130 gesichert, der sich zwischen den beiden Rührstäben 123 und 124 befindet. Dieser Sicherungsstift 130 ist als Federstecker ausgebildet. Der Sicherungsstift 130 kann eine derartige Länge aufweisen, die in etwa dem Durchmesser B des Rührelementes 121 entspricht.

Die Rührwelle 118 weist auf ihren Enden 131 und 132 unterschiedliche Durchmesser D und d auf, so daß die Rührelemente 121 auf den Enden 131 und 132 in Verbindung mit der Bohrung 133 in der Rührwelle 118, durch die der Sicherungsstift 130 gesteckt wird, immer unverwechselbar in der richtigen Position montiert werden.

Die Rührelemente 121 müssen auf den beiden Enden 131 und 132 der Rührwelle 118 in gleicher Weise montiert werden. Die Rührelemente 121 dürfen auf diesen beiden Enden in den Trichterspitzen 5 des Vorratsbehälters 3 nicht seitenverkehrt montiert werden. Dieses ist damit begründet, daß die Förderwirkung der Rührelemente 121 für den normalen Einsatzfall nicht umgekehrt werden darf, d.h. die Rührstäbe 123 und 124 der

3

Rührelemente 121 müssen immer aus den Ecken 134, 135, 136 und 137 der Trichterspitzen 5 des Vorratsbehälters 3 den Dünger in Richtung auf die Mitte, welche durch die strichpunktierte Linie 128 angedeutet ist, der Auslauföffnung 8 fördern. Hierdurch wird eine schonende Rühr- und Förderwirkung erzielt. Die Rührstäbe 123 und 124 des Rührelementes 125 überstreichen die gesamte Auslauföffnung. Somit wird immer—bei jeder Ausbringmengengröße bzw. jeder eingestellten Auslaufquerschnitt— eine gleichmäßige Zuführung des Düngers zu den Schleuderscheiben sowie eine exakte Einhaltung des Aufgabepunktes des Düngers auf Schleuderscheiben gewährleistet. Ein Mengeneffekt kann nicht auftreten.

## Patentansprüche

1. Streugerät, insbesondere Schleuderdüngerstreuer, das einen trichterförmig ausgebildeten, mit zumindest je einer Bodenplatte (6) sowie einstellbaren Auslauföffnungen (8) ausgestatteten Vorratsbehälter (3) aufweist, wobei sich die Auslauföffnungen (8) in der Bodenplatte (6) und unterhalb der Bodenplatte (6) zumindest eine um eine aufrechte Achse rotierend antreibbare Streueinrichtung (10) befindet, und wobei im unteren Bereich des Voratsbehälters (3) zumindest eine etwa horizontal angeordnete und rotierend antreibbare Rührwelle (118) mit den Auslauföffnungen zugeordneten Rührelementen (121) angeordnet ist, welche vorzugsweise mit einer wesentlich geringeren Drehzahl als die Streueinrichtung (10) angetreibbar ist, wobei die Rührelemente (121) zwei in einem Abstand über Halteelemente (122) zur Rührwelle (118) angeordneten Rührstäbe (123, 124) aufweisen, welche gegenüber der Rührwellenachse schraubenlinienförmig verdreht ausgebildet sind und der Rührstab (123, 124) einen freien und in axialer Richtung gesehen über das Halteelement (122) überstehenden Rührnocken (125, 126) aufweist, wobei ein Rührstab (123) eine linksgängige Steigung und der andere Rührstab (124) eine rechtsgängige Steigung aufweist und wobei bezogen auf die Drehrichtung (127) der Rührwelle (118) die beiden eine entgegengesetzte Steigung aufweisenden Rührstäbe (123, 124) derart auf der Rührwelle (118) angeordnet sind, daß ihre Förderwirkung aufeinander zu gerichtet ist, **dadurch gekennzeichnet,** daß die Rührstäbe (123, 124) in einem Abstand zueinander angeordnet sind, und zwar derart, daß zwischen den Rührstäben (123, 124) ein axialer Abstand (A) vorgesehen ist, so daß die Rührbereiche der Rührstäbe (123, 124) sich nicht überlappen, daß jeder Rührstab sich vom Anfang bis zum Ende über etwa eine halbe Schraubenwindung, also über einen im wesentlichen über 180° verlaufenden Schraubengang, erstreckt, und daß die Anfänge der Rührstäbe (123, 124) eines Rührelementes (121), die den geringsten axialen Abstand voneinander aufweisen, um etwa 180° versetzt zueinander angeordnet sind.

2. Streugerät nach Anspruch 1, dadurch gekennzeichnet, daß die Rührstäbe (123, 124) auf einer Hülse (129) angeordnet sind, welche auf der Rührwelle (118) aufgesteckt und mittels eines Sicherungsstiftes (130) gesichert ist, daß der Sicherungsstift (130) sich zwischen den beiden Rührstäben (123, 124) befindet.

3. Streugerät nach Anspruch 1 und/oder 2, dadurch gekennzeichnet, daß das Rührelement (121) mit federnden Elementen auf der Rührwelle angeordnet ist.

## Claims

1. A spreader, particularly a centrifugal fertiliser spreader, having a funnel-shaped hopper (3) fitted in each case with at least one base plate (6) and with adjustable outlet openings (8), the outlet openings (8) being located in the base plate (6), and at least one spreading arrangement (10) being located beneath said base plate (6) and being drivable to rotate around a vertical axis, and in which, in the lower region of the hopper (3), there is disposed a roughly horizontal and rotarily-drivable mixing shaft (118) with mixing elements (121) associated with the outlet openings, said mixing shaft being preferably drivable at a substantially lower rotational speed than the spreading arrangement (10), the mixing elements (121) having two mixing rods (123,124) spaced from the mixing shaft (118) by retainer elements (122), said mixing rods (123,124) being helically twisted relative to the axis of the mixing shaft, and the mixing rod (123,124) having a mixing cam (125,126) projecting freely, seen in the axial direction, above the retainer element (122), one mixing rod (123) having a left-hand pitch, and the other mixing rod (124) having a right-hand pitch, and wherein, relative to the direction of rotation (127) of the mixing shaft (118), both the mixing rods (123, 124) having opposite pitch are disposed on the mixing shaft (118) in such a way that their conveying actions are directed towards one another, characterised in that the mixing rods (123,124) are disposed at a spacing from one another in such a way that an axial space (A) is provided between the mixing rods (123,124), so that the mixing areas of the mixing rods (123,124) do not overlap, that each mixing rod extends from its initial portion to the end over roughly half a screw turn, i.e. over a helical pitch substantially in excess of 180°, and that the initial portions of the mixing rods (123, 124) of a mixing element (121), which have the minimum axial distance apart, are offset to one another by roughly 180°.

2. A spreader according to Claim 1, characterised in that the mixing rods (123, 124) are disposed on a sleeve (129) which is thrust on to the mixing shaft (118) and secured by a securing pin (130), and that the securing pin (130) is located between the two mixing rods (123, 124).

3. A spreader according to Claim 1 and/or 2, characterised in that the mixing element (121) is disposed on the mixing shaft with resilient elements.

## Revendications

1. Epandeur notamment épandeur centrifuge d'engrais comportant un réservoir d'alimentation (3) en forme de trémie, avec au moins une plaque de fond (6) munie d'orifices de sortie (8), une installation d'épandage (10) entraînée en rotation autour d'un axe vertical se trouvant sous les orifices de sortie (8) de la plaque de fond (6), dans la partie inférieure du réservoir d'alimentation (3) est prévu au moins un axe d'agitateur (118) horizontal entraîné en rotation, avec des éléments d'agitateur (121) associés aux orifices de sortie, ces éléments d'agitateur étant entraînés de préférence à une vitesse de rotation beaucoup plus faible que l'installation d'épandage (10), les éléments d'agitateur (121) étant constitués par deux tiges d'agitateur (123, 124) situées à une certaine distance de l'axe d'agitateur (118) en étant reliées à celui-ci par des éléments de fixation (122), les tiges d'agitateur étant tournées en hélice par rapport à l'axe de l'agitateur et les tiges (123, 124) comportant une came d'agitateur (125, 126), libre, dépassant dans la direction axiale par rapport à l'élément de fixation (122), et l'une des tiges d'agitateur (123) présentant un pas à gauche, l'autre tige d'agitateur (124) un pas à droite, et, par rapport au sens de rotation (127) de l'axe d'agitateur (118), les deux tiges d'agitateur (123, 124) à pas opposés, sont montés sur l'axe d'agitateur (118) pour que l'effet de transfert qu'elles engendrent soit dirigé l'un vers l'autre, épandeur caractérisé en ce que les tiges d'agitateur (123, 124) sont à une distance l'une de l'autre et sont montées de façon qu'entre les tiges d'agitateur (123, 124), il existe une distance axiale (A) pour que les zones d'agitation des tiges d'agitateur (123, 124) ne se recouvrent pas et que chaque tige d'agitateur s'étende à partir du début jusqu'à la fin sur environ une demi-spire c'est-à-dire sur un filet de vis de l'ordre de 180° et en ce que les débuts des tiges d'agitateur (123, 124) comportent un élément d'agitateur (121) et que ces éléments d'agitateur soient séparés de la plus faible distance axiale et soient décalés d'environ 180°.

2. Epandeur selon la revendication 1, caractérisé en ce que les tiges d'agitateur (123, 124) sont montées sur un manchon (129) qui s'engage sur l'axe d'agitateur (118) et est bloqué à l'aide d'une goupille (130) et en ce que la goupille (130) se trouve entre les deux tiges d'agitateur (123, 124).

3. Epandeur selon la revendication 1 et/ou 2, caractérisé en ce que l'élément d'agitateur (121) est monté sur l'axe d'agitateur par des éléments élastiques.

FIG. 1

FIG. 2

FIG. 3

FIG. 4

EP 0 313 995 B1